# EUROPÄISCHE PATENTSCHRIFT

(11) **EP 3 859 581 B1**
(45) Veröffentlichungstag und Bekanntmachung des Hinweises auf die Patenterteilung: **28.01.2026**
(21) Anmeldenummer: 20155133.0
(22) Anmeldetag: 03.02.2020
(51) Int. Cl.: G06F 21/62

(54) **COMPUTERIMPLEMENTIERTES AUTORISIERUNGSVERFAHREN**
COMPUTER-IMPLEMENTED AUTHORIZATION METHOD
PROCÉDÉ D'AUTORISATION MIS EN OEUVRE PAR ORDINATEUR

(43) Veröffentlichungstag der Anmeldung: 04.08.2021
(73) Patentinhaber: Büchsenschütz, David, 45257 Essen (DE)
(72) Erfinder: Büchsenschütz, David, 45257 Essen (DE)
(74) Vertreter: Gesthuysen Patentanwälte

(56) Entgegenhaltungen:
- WO-A1-2018/035492
- WO-A1-2019/028531
- WO-A2-2015/066523

## Beschreibung

Die Erfindung geht aus von einem Computerimplementierten Autorisierungsverfahren für digitale Bildinformationen zur Verwendung mit einem digitalen Bereitstellungsdienst, wobei dem digitalen Bereitstellungsdienst von wenigstens einem ersten Bereitstellungsdienst-Nutzer in einem ersten Bereitstellungsschritt Bildinformationen bereitgestellt werden, wobei auf den bereitgestellten Bildinformationen basierende abgeleitete Bildinformationen von dem Bereitstellungsdienst mittels einer Bereitstellungsdienst-Infrastruktur wenigstens einem zweiten Bereitstellungsdienst-Nutzer verfügbar gemacht werden.

Im Rahmen der vorliegenden Erfindung ist ein solcher digitaler Bereitstellungsdienst ein digitales Medium, über das Nutzer, vorliegend als Bereitstellungsdienst-Nutzer bezeichnet, zumindest Bildinformationen bereitstellen, d.h. veröffentlichen und/oder weiterleiten können. Besonders bevorzugt ist der Bereitstellungsdienst-Nutzer hierfür bei dem Bereitstellungsdienst registriert. Der Bereitstellungsdienst-Nutzer hat hierfür seinen Namen und/oder einen Nutzernamen und/oder seine Adresse und/oder seine E-Mail-Adresse und/oder seine Telefonnummer und/oder eine weitere, den Nutzer identifizierende Angabe bei dem Bereitstellungsdienst hinterlegt.

Insbesondere ist ein solcher digitaler Bereitstellungsdienst ein Soziales Netzwerk, wie beispielsweise Facebook, Instagramm, Twitter, Snapchat, WhatsApp, Youtube, Facebook-Massenger, Reddit, QQ, Telegramm, Pinterest, LinkedIn, TikTok, etc..

Die von einem Bereitstellungsdienst-Nutzer bereitgestellten Bildinformationen betreffen statische Bilder, wie Fotos und/oder Zeichnungen, und darüber hinaus bewegte Bilder, insbesondere in Form von Videos und/oder Animationen.

Wenn es heißt, dass die bereitgestellten Bildinformationen einem zweiten Bereitstellungsdienst-Nutzer verfügbar gemacht werden, so ist damit gemeint, dass der zweite Bereitstellungsdienst-Nutzer die bereitgestellten Bildinformationen empfangen und/oder abrufen und/oder runterladen kann. Der Bereitstellungsdienst-Nutzer, dem die bereitgestellten Bildinformationen verfügbar gemacht werden, kann ebenfalls bei dem Bereitstellungsdienst registriert sein, alternativ kann der Bereitstellungsdienst-Nutzer die bereitgestellten Bildinformationen auch empfangen und/oder abrufen und/oder runterladen, wenn er nicht bei dem Bereitstellungsdienst registriert ist.

Bei der Bereitstellung, also der Verbreitung und/oder der Veröffentlichung von Bildinformationen ist von dem Bereitstellungsdienst-Nutzer in dem Fall, in dem wenigstens eine Person abgebildet ist, das Recht am eigenen Bild der abgebildeten Person oder der abgebildeten Personen zu berücksichtigen. Gegebenenfalls ist insofern das Einverständnis der abgebildeten Person oder der abgebildeten Personen für die Bereitstellung von Bildinformationen erforderlich.

Problematisch ist grundsätzlich, dass eine individuelle Person, insbesondere wenn sie nicht bei dem entsprechenden digitalen Bereitstellungsdienst registriert ist, entweder nicht mitbekommt, wenn eine Darstellung von ihrer Person veröffentlicht bzw. verbreitet wird, oder es erst mitbekommt, wenn die Darstellung bereits veröffentlicht oder verbreitet ist. In diesem Fall besteht also ohne den persönlichen Kontakt zwischen dem Bereitstellungsdienst-Nutzer und der dargestellten Person keine Möglichkeit, eine unzensierte Veröffentlichung zu verhindern.

Aus der Druckschrift EP 2 557 524 A1 ist ein Verfahren zur automatischen Markierung von Personen auf Bildern in sozialen Netzwerken bekannt, wobei die auf hochgeladenen Bildern erfassten Personen registrierten Nutzern der sozialen Netzwerke bei hinreichender Übereinstimmung in der Gesichtserkennung zugeordnet werden. Nachteilig an diesem Verfahren ist insbesondere, dass eine entsprechende Zuordnung nur dann erfolgen kann, wenn die erfasste Person selbst in dem sozialen Netzwerk registriert ist und ein Foto von sich bereitgestellt hat. Zudem erfolgt eine Markierung von den erfassten Personen erst, wenn die Bildinformationen schon veröffentlicht sind.

Ausgehend von diesem Stand der Technik, ist es Aufgabe der vorliegenden Erfindung ein computerimplementiertes Autorisierungsverfahren anzugeben, mit dem ein Autorisierungsverfahren-Nutzer die Veröffentlichung und/oder die Verbreitung einer in sein Recht am eigenen Bild eingreifenden unzensierten Darstellung verhindern oder erlauben kann.

Gemäß der Lehre der Erfindung wird die zuvor genannte Aufgabe durch ein eingangs beschriebenes Verfahren dadurch gelöst, dass in einer rechnerbasierten Autorisierungsdatenbank Autorisierungsdaten von Autorisierungsverfahren-Nutzern hinterlegt werden oder hinterlegt sind, wobei die Autorisierungsdaten nutzerspezifische, insbesondere biometrische Informationen und nutzerspezifische Bereitstellungsoptionen umfassen,
dass in einem ersten Personenerkennungsschritt erkannt wird, ob auf den bereitgestellten Bildinformationen eine Person abgebildet ist,
dass zumindest in dem Fall, in dem eine Person erkannt ist, mit einer rechnerbasierten Autorisierungsinfrastruktur in einem zweiten Personenerkennungsschritt unter Verwendung der nutzerspezifischen, insbesondere biometrischen Informationen ermittelt wird, ob die dargestellte Person eine Darstellung eines Autorisierungsverfahren-Nutzers umfasst,
dass für den Fall, dass die bereitgestellten digitalen Bildinformationen eine Darstellung eines Autorisierungsverfahren-Nutzers umfassen, unter Verwendung der nutzerspezifischen Bereitstellungsoptionen des dargestellten Autorisierungsverfahren-Nutzers in einem Zensurschritt aus den bereitgestellten digitalen Bildinformationen entsprechend abgeleitete Bildinformationen abgeleitet werden und
dass die abgeleiteten Bildinformationen in einem Freigabeschritt zur Bereitstellung zur Verfügung gestellt werden.

Die Erfindung betrifft damit insbesondere einen Upload-Filter und eine Autorisierungsdatenbank,wobei mittels der erfindungsgemäßen Autorisierungsinfrastruktur überwacht wird, ob Darstellungen von Autorisierungsverfahren-Nutzern bereitgestellt, d.h. veröffentlicht und/oder verbreitet werden.

Das erfindungsgemäße Verfahren weist den Vorteil auf, dass der Autorisierungsverfahren-Nutzer nicht selbst bei dem entsprechenden Bereitstellungsdienst registriert sein muss, um die Veröffentlichung und/oder die Verbreitung von der Darstellung seiner Person durch den Bereitstellungsdienst zu kontrollieren. Darüber hinaus wird bereits vor der Veröffentlichung und/oder der Verbreitung von der Darstellung der Person eines Autorisierungsverfahren-Nutzers eine Zensur von ungewollten Veröffentlichungen und/oder Verbreitungen realisiert.

Besonders bevorzugt ist die Autorisierungsdatenbank auf einem in Bezug auf den Bereitstellungsdienst externen Server eingerichtet. Autorisierungsdatenbank-Nutzer können vorzugsweise auf die Autorisierungsdatenbank zugreifen und ihre Autorisierungsdaten hinterlegen und/oder ändern.

Das erfindungsgemäße Autorisierungsverfahren wird vorzugsweise auf der Infrastruktur des Bereitstellungsdienstes ausgeführt, wobei der Zugriff bzw. der Datenaustausch mit der erfindungsgemäßen Autorisierungsdatenbank über eine Softwareschnittstelle erfolgt. Auf diese Weise kann der Transfer von großen Datenmengen verhindert werden.

Alternativ ist es ebenfalls denkbar, dass das erfindungsgemäße Verfahren auf einem in Bezug auf den Bereitstellungsdienst externen Server hinterlegt ist und ausgeführt wird. Auch in diesem Fall ist die Autorisierungsinfrastruktur über eine Softwareschnittstelle mit der Infrastruktur des Bereitstellungsdienstes verknüpft.

Gemäß einer Ausgestaltung des Verfahrens wird der zweite Personenerkennungsschritt in Abhängigkeit von wenigstens einem weiteren Kriterium ausgeführt, wobei das wenigstens eine weitere Kriterium die auf den Bildinformationen dargestellte Umgebung, insbesondere die Anzahl der dargestellten Personen und/oder den ersten Bereitstellungsdienst-Nutzer betrifft.

Im Detail wird durch die Berücksichtigung von wenigstens einem weiteren Kriterium beurteilt, ob tatsächlich das Recht am eigenen Bild der dargestellten Person betroffen ist.

Besonders bevorzugt wird der zweite Personenerkennungsschritt nicht ausgeführt, wenn die Anzahl der auf den Bildinformationen erkannten Personen größer als 1, vorzugsweise größer 5, besonders bevorzugt größer als 10 ist. Besonders bevorzugt wird in dem Fall, in dem die Personenanzahl größer als 5 ist, zusätzlich geprüft, ob eine Person hervorgehoben ist, beispielsweise dadurch, dass das Gesicht dieser Person größer, insbesondere wenigstens doppelt so groß wie die Gesichter der übrigen abgebildeten Personen, dargestellt ist. Sofern dies bejaht wird, wird der zweite Personenerkennungsschritt ausgeführt, obwohl die Anzahl der auf den Bildinformationen erkannten Personen größer als 5 ist.

Alternativ oder zusätzlich wird der zweite Personenerkennungsschritt nicht ausgeführt, wenn die dargestellte Person im Vergleich zu der dargestellten Umgebung, beispielsweise einem dargestellten Gebäude, besonders klein abgebildet ist. Dies kann beispielsweise dadurch beurteilt werden, dass das Gesicht der abgebildeten Person höchstens 5% der abgebildeten Umgebung, beträgt. In diesem Fall kann davon ausgegangen werden, dass die abgebildete Person lediglich als Beiwerk zu der dargestellten Umgebung abgebildet ist. Das Recht am eigenen Bild ist in diesem Fall nicht betroffen.

Zudem kann auch durch die Person des Bereitstellungsdienst-Nutzers ausgeschlossen sein, dass das Recht am eigenen Bild betroffen ist. Ist beispielsweise der Bereitstellungsdienst-Nutzer Teil einer Behörde oder der Presse, kann ebenfalls ausgeschlossen sein, dass das Recht am eigenen Bild betroffen ist.

Gemäß einer weiteren Ausgestaltung wird der zweite Personenerkennungsschritt nicht durchgeführt, wenn die erkannte Person und/oder die erkannte Personengruppe im Zusammenhang eines geschichtlichen Ereignisses, wie beispielsweise einer Demonstration, abgebildet ist. Hierzu können beispielsweise Merkmale, wie die Kleidung der abgebildeten Personen und/oder andere Umgebungsmerkmale, wie Demonstrationsschilder erfasst werden, die beispielsweise auf die Abbildung einer Demonstration hinweisen.

Zudem kann gemäß einer nächsten Ausgestaltung ein in Zusammenhang mit der Bildinformation stehender Text, insbesondere eine Bildunterschrift, im Hinblick auf den Zweck der Bereitstellung ausgewertet werden. Hierzu wird der mit der Bildinformation in Zusammenhang stehende Text insbesondere im Hinblick auf solche Schlagwörter analysiert, die darauf hinweisen, dass die Bildinformation die dargestellte Person nicht nur als Beiwerk betrifft.

Zudem kann auch der Personenkreis, dem die Bildinformation zur Verfügung gestellt werden soll, für die Beurteilung, ob das Recht am eigenen Bild betroffen ist, herangezogen werden.

Wird der zweite Personenerkennungsschritt nicht ausgeführt, so werden vorzugsweise die Bildinformationen unmittelbar in dem Freigabeschritt zur Bereitstellung, d.h. zur Veröffentlichung und/oder zur Weiterleitung zur Verfügung gestellt.

Gemäß einer nächsten Ausgestaltung des Verfahrens umfassen die biometrischen Informationen Proportionen des Gesichtes und/oder des Körpers des Autorisierungsverfahren-Nutzers, wobei vorzugsweise in der Autorisierungsdatenbank eine aus den biometrischen Informationen abgeleitete individuelle Nutzer-ID (Nutzer-Identifikation) erstellt wird oder hinterlegt ist. Hierzu kann der Autorisierungsverfahren-Nutzer beispielsweise wenigstens ein Foto, das eine Darstellung seiner Person, insbesondere seines Gesichtes, in Frontansicht und optional wenigstens ein weiteres Foto, das eine Darstellung seiner Person im Profil zeigt, in der Autorisierungsdatenbank hinterlegen.

Beispielsweise umfassen die biometrischen Informationen alternativ oder zusätzlich Daten insbesondere hinsichtlich der Position und/oder des Abstandes von charakteristischen Referenzpunkten, wie beispielsweise den Abstand der Augen zueinander und/oder den Abstand von wenigstens einem Auge und einem Referenzpunkt der Nase und/oder den Abstand von wenigstens einem Auge zu einem Referenzpunkt im Bereich des Mundes und/oder den Abstand von wenigstens einem Referenzpunkt der Nase zu wenigstens einem Referenzpunkt im Bereich des Mundes.

Alternativ oder zusätzlich umfassen die biometrischen Daten die Augenfarbe und/oder die Haarfarbe und/oder wenigstens ein weiteres unveränderliches Erkennungsmerkmal, wie beispielsweise ein Muttermal.

Alternativ und/oder zusätzlich umfassen die biometrischen Daten wenigstens ein veränderliches Erkennungsmerkmal, wie beispielsweise einen Ohrring.

Gemäß einer besonders bevorzugten Ausgestaltung ist die Nutzer-ID als wenigstens eine Zeichenkette ausgebildet, die die eindeutige Beschreibung des abgebildeten Gesichtes enthält.

Ist mehr als ein Foto vorhanden, so weist die Nutzer-ID mehr als eine Zeichenkette auf.

Weiterhin ist es vorteilhaft, wenn die nutzerspezifischen Bereitstellungsoptionen wenigstens einen autorisierten Bereitsteller umfassen, wobei der wenigstens eine autorisierte Bereitsteller vorzugsweise über ein Profil hinterlegt ist oder hinterlegt wird, wobei das Profil einen Nutzernamen und/oder eine E-Mail Adresse und/oder eine Telefonnummer und/oder eine andere dem Bereitsteller zuordenbare Identifikation umfasst. Besonders bevorzugt entspricht das Profil des autorisierten Bereitstellers zumindest teilweise dem Profil, mit dem der autorisierte Bereitsteller bei dem Bereitstellungsdienst registriert ist.

Eine weitere vorteilhafte Ausgestaltung zeichnet sich dadurch aus, dass die nutzerspezifischen Bereitstellungsoptionen wenigstens eine der folgenden Optionen umfassen: bereichsweise Unkenntlichmachung der bereitgestellten Bildinformationen, insbesondere im Bereich des Gesichts des Autorisierungsverfahren-Nutzers, vollständige Unkenntlichmachung der bereitgestellten Bildinformationen, keine Beeinflussung der bereitgestellten Bildinformationen, Verschlüsselung der bereitgestellten Bildinformationen, Sperrung der möglichen Bereitstellung der Bildinformationen.

Hierzu wird vorzugsweise die Position des Gesichtes innerhalb des Pixelrasters der bereitzustellenden Bildinformation bestimmt.

Gemäß den festgelegten nutzerspezifischen Bereitstellungsoptionen wird in einer besonders bevorzugten Ausgestaltung das Gesicht unkenntlich gemacht, insbesondere verpixelt und/oder oder gefärbt.

Besonders bevorzugt wird, sofern in dem ersten Personenerkennungsschritt eine Person erkannt wird, eine Personen-ID (Personen-Identifikation), insbesondere basierend auf den dargestellten biometrischen Informationen, erstellt. Beispielsweise werden zur Erstellung der Personen-ID die Proportionen des erkannten Gesichtes und optional zusätzlich die Körpermaße der erkannten Person berücksichtigt.

Zur Erstellung der Personen-ID werden, wie bereits dargelegt, vorzugsweise die biometrischen Informationen der erkannten Person berücksichtigt.

Beispielsweise umfassen die biometrischen Informationen Daten insbesondere insbesondere hinsichtlich der Position und/oder des Abstandes von charakteristischen Referenzpunkten, insbesondere den Abstand der Augen zueinander und/oder den Abstand von wenigstens einem Auge und einem Referenzpunkt der Nase und/oder den Abstand von wenigstens einem Auge zu einem Referenzpunkt im Bereich des Mundes und/oder den Abstand von wenigstens einem Referenzpunkt der Nase zu wenigstens einem Referenzpunkt im Bereich des Mundes.

Alternativ oder zusätzlich umfassen die biometrischen Daten die Augenfarbe und/oder die Haarfarbe und/oder wenigstens ein weiteres unveränderliches Erkennungsmerkmal, wie beispielsweise ein Muttermal.

Alternativ und/oder zusätzlich umfassen die biometrischen Informationen wenigstens ein veränderliches Erkennungsmerkmal, wie beispielsweise einen Ohrring.

Gemäß einer besonders bevorzugten Ausgestaltung ist die Personen-ID als wenigstens eine Zeichenkette ausgebildet, die die eindeutige Beschreibung des abgebildeten Gesichtes enthält.

Als Verfahren zur Gesichterkennung bzw. zur Erkennung, ob eine erkannte Person eine Darstellung eines Autorisierungsverfahren-Nutzers umfasst, eignet sich jedes aus dem Stand der Technik bekannte Verfahren zur Gesichtserkennung bzw. zum Vergleich zweier Personen betreffende Bildinformationen. Beispielsweise kann der Vergleich der bereitzustellenden Bildinformationen mit den in der Autorisierungsdatenbank hinterlegten Bildinformationen ebenfalls unmittelbar mittels wenigstens einer biometrischen Informationen, also ohne Erstellung einer individuellen ID erfolgen. Dies betrifft ebenso auch zukünftige Entwicklungen der zuvor beschriebenen Verfahren, die zur Verwirklichung des erfindungsgemäßen Verfahrens verwendet werden.

Vorzugsweise wird in dem zweiten Personenerkennungsschritt die erstellte Personen-ID mit den in der Autorisierungsdatenbank hinterlegten Nutzer-IDs verglichen, wobei eine Darstellung eines Autorisierungsverfahren-Nutzers bejaht wird, sofern die Übereinstimmung der Personen-ID mit einer Nutzer-ID wenigstens 70%, vorzugsweise wenigstens 80%, besonders bevorzugt wenigstens 90% beträgt.

Alternativ zu dem Vergleich der Nutzer-ID mit der Personen-ID können, wie bereits dargelegt, ebenso einzelne biometrische Informationen unmittelbar miteinander verglichen werden.

Gemäß einer weiteren Ausgestaltung werden, sofern in dem ersten Personenerkennungsschritt eine Person auf den Bildinformationen erkannt wird und eine Übereinstimmung der erstellten Personen-ID mit einer Nutzer-ID eines Autorisierungsverfahren-Nutzers festgestellt wird, dem Autorisierungsverfahren-Nutzer die Bildinformationen zur Verfügung gestellt. Beispielsweise können dem Autorisierungverfahren-Nutzer die Bildinformationen unmittelbar übermittelt werden oder die Bildinformationen werden ihm zum runterladen angeboten.

Besonders bevorzugt steht dem Autorisierungsverfahren-Nutzer ein festgelegtes Zeitfenster zur Verfügung, innerhalb dessen der Autorisierungsverfahren-Nutzer festlegen kann, ob eine der zuvor genannten möglichen Zensuren vorgenommen wird oder ob die Bildinformationen unverändert zur Bereitstellung freigegeben werden. Im letztgenannten Fall entsprechen die in dem Zensurschritt erstellten abgeleiteten Bildinformationen den ursprünglich bereitgestellten Bildinformationen.

Gemäß einer weiteren Ausgestaltung des Verfahrens kann der Autorisierungsverfahren-Nutzer, wenn ihm, wie zuvor dargelegt, die Bildinformationen zur Verfügung gestellt werden, alternativ oder zusätzlich bestätigen, ob die erkannte Person auf den Bildinformationen tatsächlich eine Darstellung seiner Person ist. Hierdurch kann ausgeschlossen werden, dass Darstellungen von Personen, die dem Autorisierungsverfahren-Nutzer ähnlich sind, fälschlicherweise zensiert werden.

Besonders bevorzugt ist das Verfahren derart ausgebildet, dass dem Autorisierungsverfahren-Nutzer die Bildinformationen zur Bestätigung zur Verfügung gestellt werden, wenn die Übereinstimmung der Nutzer-ID und der Personen-ID zwischen 60% und 80% liegt.

Gemäß einer nächsten Ausgestaltung des Verfahrens werden die nutzerspezifischen Bereitstellungsoptionen realisiert, wenn die Übereinstimmung der Personen-ID und der Nutzer-ID größer als 80% ist, wobei dem Autorisierungsverfahren-Nutzer die Bildinformationen zur Bestätigung zur Verfügung gestellt werden, wenn die Übereinstimmung zwischen 60% und 80% liegt. Mit dieser Ausgestaltung wird insofern unterschieden zwischen dem Fall, dass der Autorisierungsverfahren-Nutzer mit hoher Wahrscheinlichkeit dargestellt ist und dem Fall, dass eventuell eine dem Autorisierungsverfahren-Nutzer ähnliche Person dargestellt ist.

Besonders bevorzugt wird zusätzlich zu den bereitgestellten Bildinformationen auch eine Information über den ersten Bereitstellungsdienst-Nutzer bereitgestellt, wobei für den Fall, dass der erste Bereitstellungsdienst-Nutzer als autorisierter Bereitsteller hinterlegt ist, die in dem Zensurschritt erstellten abgeleiteten Bildinformationen den ursprünglich bereitgestellten Bildinformationen entsprechen, und insofern die ursprünglich bereitgestellten Bildinformation in dem Freigabeschritt dem digitalen Bereitstellungsdienst unzensiert verfügbar gemacht werden.

In dem Fall, in dem der Bereitstellungsdienst-Nutzer nicht als autorisierter Bereitsteller hinterlegt ist, wird vorzugsweise dem Autorisierungsverfahren-Nutzer vor dem Zensurschritt eine Nachricht hinsichtlich der nachfolgenden Zensur übermittelt, wobei der Autorisierungsverfahren-Nutzer den Bereitstellungsdienst-Nutzer innerhalb von einem festgelegten Zeitfenster seinen nutzerspezifischen Bereitstellungsoptionen als autorisierter Bereitsteller hinzufügen kann, sodass in dem Zensurschritt keine Zensur der bereitgestellten Bildinformationen erfolgt. Das Zeitfenster kann beispielsweise 24 Stunden betragen. Sofern der Autorisierungsverfahren-Nutzer innerhalb dieses Zeitfensters den Bereitstellungsdienst-Nutzer seinen nutzerspezifischen Bereitstellungsoptionen nicht als autorisierter Bereitsteller hinzufügt, wird in dem Zensurschritt eine Zensur seiner Darstellung ausgeführt.

Gemäß einer besonders bevorzugten Ausgestaltung ist die Möglichkeit, eine Nachricht zu erhalten, sofern ein Bereitstellungsdienst-Nutzer Bildinformationen bereitstellen möchte, die eine Darstellung des Autorisierungsverfahren-Nutzers umfassen, ebenfalls eine nutzerspezifische Bereitstellungsoption, die jeder Autorisierungsverfahren-Nutzer individuell auswählen kann.

Gemäß einer weiteren bevorzugten Ausgestaltung kann nach der Freigabe der abgeleiteten Bildinformationen der Autorisierungsverfahren-Nutzer innerhalb von einem festgelegten Zeitfenster seine nutzerspezifischen Bereitstellungsoptionen in Bezug auf den Bereitstellungsdienst-Nutzer ändern, sodass die Änderung der nutzerspezifischen Bereitstellungsoptionen für die freigegebenen Bildinformationen realisiert wird. Beispielsweise kann der Autorisierungsverfahren-Nutzer den Bereitstellungsdienst-Nutzer nachträglich seiner Liste an autorisierten Bereitstellern hinzufügen, sodass eine Zensur der freigegebenen Bildinformationen rückgängig gemacht wird.

Hierzu werden in der Datenbank die unveränderten Bildinformationen hinterlegt. Anschließend wird eine Nachricht an den Autorisierungsverfahren-Nutzer gesendet, mit der der Autorisierungsverfahren-Nutzer über die Hinterlegung der Bildinformationen in Kenntnis gesetzt wird. In einem nächsten Schritt kann der Autorisierungsverfahren-Nutzer der Bereitstellung der Bildinformationen zustimmen. Anschließend wird die abgeleitete, zensierte Bildinformation mit der unveränderten Bildinformation überschrieben.

Im Einzelnen gibt es nun eine Vielzahl von Möglichkeiten das erfindungsgemäße Verfahren auszugestalten und weiterzubilden. Hierzu wird verwiesen auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Verfahrens,
- Fig. 2: ein zweites Ausführungsbeispiel eines erfindungsgemäßen Verfahrens,
- Fig. 3: ein drittes Ausführungsbeispiel eines erfindungsgemäßen Verfahrens und
- Fig. 4: ein Ausführungsbeispiel einer Autorisierungsinfrastruktur.

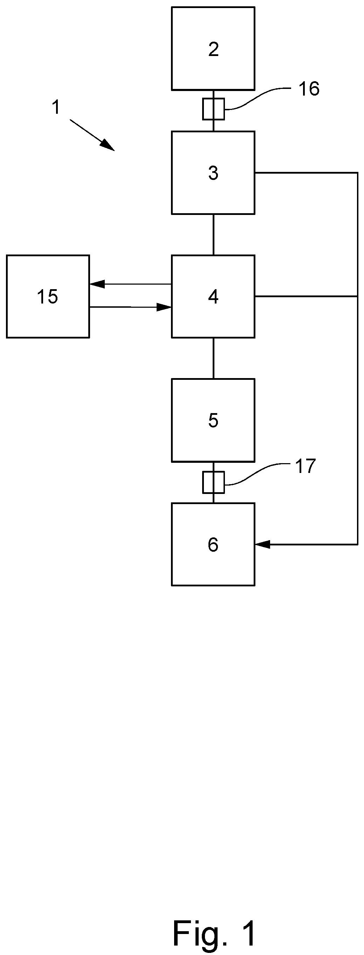

In Fig. 1 ist ein erstes Ausführungsbeispiel eines computerimplementierten Autorisierungsverfahrens 1 für digitale Bildinformationen zur Verwendung in einem digitalen Bereitstellungsdienst 11. Im Detail umfasst das Verfahren 1 die Überprüfung, ob auf zur Veröffentlichung und/oder Weiterleitung vorgesehenen Bildinformationen ein Autorisierungsverfahren-Nutzer einer erfindungsgemäßen Autorisierungsinfrastrukter 15 dargestellt ist, wobei in dem Fall, in dem ein Autorisierungsverfahren-Nutzer erkannt wird, nutzerspezifische Optionen realisiert werden.

Hierzu sind in einer Autorisierungsdatenbank 12 von dem Autorisierungsverfahren-Nutzer 13 sowohl nutzerspezifische biometrische Informationen als auch nutzerspezifischen Optionen hinterlegt.

In einem ersten Bereitstellungsschritt 2 werden dem digitalen Bereitstellungsdienst 11 von wenigstens einem ersten Bereitstellungsdienst-Nutzer Bildinformationen 16 bereitgestellt. Zusätzlich zu den digitalen Bildinformationen 16 werden ebenfalls Informationen über den ersten Bereitstellungsdienst-Nutzer bereitgestellt.

In einem ersten Personenerkennungsschritt 3 wird mittels eines Verfahrens zur Gesichtserkennung erfasst, ob auf den bereitgestellten Bildinformationen 16 eine Person abgebildet ist.

Sofern auf den bereitgestellten Bildinformationen 16 keine Person erfasst wird, wird die Bildinformation freigegeben 6.

In dem Fall, in dem eine Person erfasst wird, wird in einem zweiten Personenenerkennungsschritt 4 mit einer rechnerbasierten Autorisierungsinfrastruktur 15 ermittelt, ob die dargestellte Person ein Autorisierungsverfahren-Nutzer 13 ist.

Sofern die dargestellte Person kein Autorisierungsverfahren-Nutzer 13 ist, werden die Bildinformationen 16 freigegeben 6.

In dem Fall, in dem die auf den Bildinformationen 16 erfasste Person einem Autorisierungsverfahren-Nutzer 13 zugeordnet werden kann, werden unter Verwendung der nutzerspezifischen Bereitstellungsoptionen in einem Zensurschritt 5 aus den bereitgestellten digitalen Bildinformationen 16 abgeleitete Bildinformationen 17 erstellt.

Im Detail umfassen in dem dargestellten Ausführungsbeispiel die nutzerspezifischen Bereitstellungsoptionen eine Liste von autorisierten Bereitstellern. Durch die Bereitstellung der Informationen des Bereitstellungsdienst-Nutzers kann erfasst werden, ob der Bereitstellungsdienst-Nutzer von der Liste der autorisierten Bereitsteller umfasst ist.

In dem Fall, in dem der Bereitstellungsdienst-Nutzer von der Liste der autorisierten Bereitsteller umfasst ist, entsprechen die abgeleiteten Bildinformationen 17 den ursprünglich bereitgestellten Bildinformationen 16.

Sofern der Bereitstellungsdienst-Nutzer nicht von der Liste der autorisierten Bereitsteller umfasst ist, wird im dargestellten Ausführungsbeispiel die Bildinformation 16 bereichsweise, im Detail im Bereich des Gesichtes des Autorisierungsverfahren-Nutzers 13 unkenntlich gemacht.

In einem letzten Schritt 6 werden die abgeleiteten Bildinformationen zur Veröffentlichung und/oder Weiterleitung freigegeben.

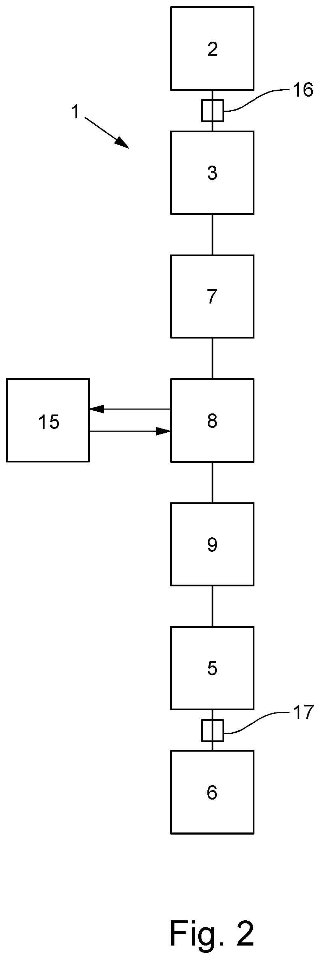

In Fig. 2 ist ein zweites Ausführungsbeispiel eines computerimplementierten Autorisierungsverfahrens 1 für digitale Bildinformationen zur Verwendung mit einem digitalen Bereitstellungsdienst 11 dargestellt. In der erfindungsgemäßen Autorisierungsdatenbank 12 sind biometrische Informationen eines Autorisierungsverfahren-Nutzers 13 hinterlegt, aus denen eine Nutzer-ID abgeleitet ist. Zudem sind ebenfalls nutzerspezifische Bereitstellungsoptionen hinterlegt, die eine Liste von autorisierten Bereitstellern umfassen.

Wie im ersten Ausführungsbeispiel werden in einem ersten Bereitstellungsschritt 2 dem digitalen Bereitstellungsdienst 11 von wenigstens einem ersten Bereitstellungsdienst-Nutzer Bildinformationen 16 bereitgestellt. Darüber hinaus werden ebenso Informationen über den ersten Bereitstellungsdienst-Nutzer bereitgestellt.

In einem ersten Personenerkennungsschritt 3 wird mittels eines Verfahrens zur Gesichtserkennung erfasst, ob auf den bereitgestellten Bildinformationen 16 eine Person abgebildet ist.

Sofern eine Person erkannt ist, wird in einem nächsten Schritt 7 aus den den Bildinformationen 16 zu entnehmenden biometrischen Informationen eine Personen-ID erstellt.

Zur Bestimmung im Rahmen des zweiten Personenerkennungsschrittes 4 wird die Personen-ID mit den in der Autorisierungsdatenbank 12 hinterlegten Nutzer-IDs verglichen 8. Eine Darstellung eines Autorisierungsverfahren-Nutzers wird bejaht, wenn die Übereinstimmung der Personen-ID mit einer Nutzer-ID wenigstens 80% beträgt.

Wird eine Übereinstimmung der dargestellten Person mit einem Autorisierungsverfahren-Nutzer 13 festgestellt, werden unter Verwendung der nutzerspezifischen Bereitstellungsoptionen in einem folgenden Zensurschritt 5 aus den bereitgestellten digitalen Bildinformationen 16 abgeleitete Bildinformationen 17 erstellt.

Im Detail wird anhand der Bereitstellung der Informationen über den Bereitstellungsdienst-Nutzer überprüft, ob der Bereitstellungsdienst-Nutzer von der Liste der autorisierten Bereitsteller umfasst ist.

In dem Fall, in dem der Bereitstellungsdienst-Nutzer von der Liste der autorisierten Bereitsteller umfasst ist, entsprechen die abgeleiteten Bildinformationen 17 den ursprünglich bereitgestellten Bildinformationen 16.

Sofern der Bereitstellungsdienst-Nutzer nicht von der Liste der autorisierten Bereitsteller umfasst ist, erhält der Autorisierungsverfahren-Nutzer 13 in einem nächsten Schritt 9 eine Nachricht, über die anstehende Zensur der bereitgestellten Bildinformationen 16.

Vorzugsweise erhält der Autorisierungsverfahren-Nutzer mit der Nachricht ebenfalls die Bildinformation 16 oder eine Möglichkeit der Kenntnisnahme, beispielsweise einen Link zum Download der Bildinformationen. Mit Erhalt dieser Nachricht kann der Autorisierungsverfahren-Nutzer 13 den Bereitstellungsdienst-Nutzer innerhalb eines festgelegten Zeitfensters, das im vorliegenden Ausführungsbeispiel 24 Stunden beträgt, seiner Liste der autorisierten Bereitstellern hinzufügen. In diesem wird die nachfolgende Zensur der Bildinformationen 16 nicht durchgeführt.

Fügt der Autorisierungsverfahren-Nutzer 13 den Bereitstellungsdienst-Nutzer seiner Liste der autorisierten Bereitsteller nicht oder nicht innerhalb des vorgesehenen Zeitfensters hinzu, so werden im dargestellten Ausführungsbeispiel die Bildinformation, die den Autorisierungsverfahren-Nutzer 13 betreffen vollständig unkenntlich gemacht.

In einem letzten Schritt 6 werden die abgeleiteten Bildinformationen 17 zur Bereitstellung freigegeben.

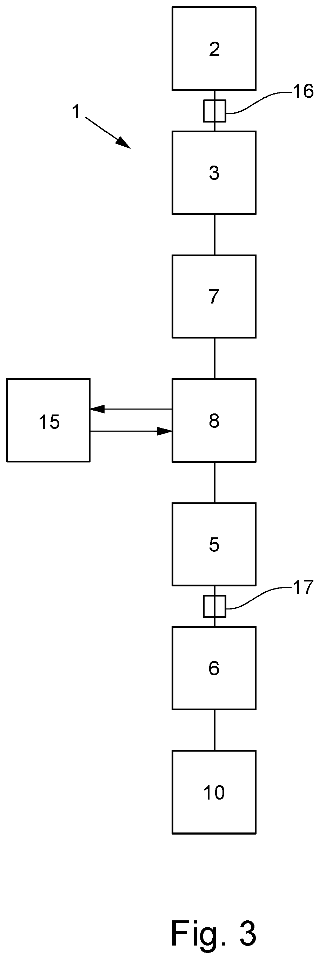

Fig. 3 zeigt ein weiteres Ausführungsbeispiel eines computerimplementierten Autorisierungsverfahren 1 für digitale Bildinformationen zur Verwendung mit einem digitalen Bereitstellungsdienst 11. In der erfindungsgemäßen Autorisierungsdatenbank sind biometrische Informationen wenigstens eines Autorisierungsverfahren-Nutzers 13 hinterlegt, aus denen eine individuelle Nutzer-ID abgeleitet ist. Zudem sind ebenfalls nutzerspezifische Bereitstellungsoptionen hinterlegt, die eine Liste von autorisierten Bereitstellern umfassen.

Wie in den zuvor dargestellten Ausführungsbeispielen werden in einem ersten Bereitstellungsschritt 2 dem digitalen Bereitstellungsdienst 11 von einem Bereitstellungsdienst-Nutzer Bildinformationen 16 bereitgestellt. Neben den Bildinformationen 16 werden ebenso Informationen über den Bereitstellungsdienst-Nutzer bereitgestellt.

In einem ersten Personenerkennungsschritt 3 wird mittels eines Verfahrens zur Gesichtserkennung erfasst, ob auf den bereitgestellten Bildinformationen 16 eine Person abgebildet ist.

Sofern eine Person erkannt ist, wird in einem nächsten Schritt 7 aus den den Bildinformationen 16 zu entnehmenden biometrischen Informationen eine Personen-ID erstellt.

Zur Bestimmung im Rahmen des zweiten Personenerkennungsschrittes 4 wird die Personen-ID mit den in der Autorisierungsdatenbank hinterlegten Nutzer-IDs verglichen 8. Eine Darstellung eines Autorisierungsverfahren-Nutzers wird bejaht, wenn die Übereinstimmung der Personen-ID mit einer Nutzer-ID wenigstens 90% beträgt.

Wird eine Übereinstimmung der dargestellten Person mit einem Autorisierungsverfahren-Nutzer 13 festgestellt, werden unter Verwendung der nutzerspezifischen Bereitstellungsoptionen in einem folgenden Zensurschritt 5 aus den bereitgestellten digitalen Bildinformationen abgeleitete Bildinformationen erstellt.

Im Detail wird anhand der Bereitstellung der Informationen des Bereitstellungsdienst-Nutzers überprüft, ob der Bereitstellungsdienst-Nutzer von der Liste der autorisierten Bereitsteller umfasst ist.

In dem Fall, in dem der Bereitstellungsdienst-Nutzer von der Liste der autorisierten Bereitsteller umfasst ist, entsprechen die abgeleiteten Bildinformationen 17 den ursprünglich bereitgestellten Bildinformationen 16.

Sofern der Bereitstellungsdienst-Nutzer nicht von der Liste der autorisierten Bereitsteller umfasst ist, wird im dargestellten Ausführungsbeispiel die Bildinformation, die den Autorisierungsverfahren-Nutzer betreffen vollständig unkenntlich gemacht.

In einem nächsten Schritt 6 werden die abgeleiteten Bildinformationen 17 zur Bereitstellung freigegeben.

Nach der Freigabe der abgeleiteten Bildinformationen 17 kann der Autorisierungsverfahren-Nutzer innerhalb von einem festgelegten Zeitfenster seine nutzerspezifischen Bereitstellungsoptionen in Bezug auf den Bereitstellungsdienst-Nutzer ändern 10, sodass nachträglich die Änderung der nutzerspezifischen Bereitstellungsoptionen für die freigegebenen Bildinformationen 17 realisiert wird.

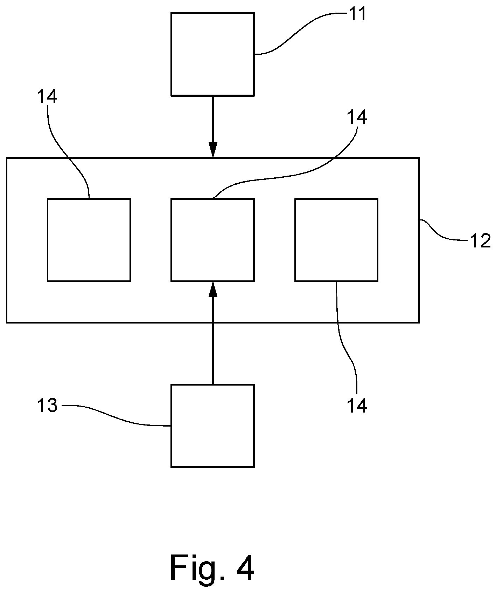

Fig. 4 zeigt schematisch die die Erfindung betreffende Infrastruktur. Zur Realisierung des erfindungsgemäßen Verfahrens 1 ist der digitale Bereitstellungsdienst 11 über eine Softwareschnittstelle mit der erfindungsgemäßen Autorisierungsdatenbank 12 verbunden.

Im dargestellten Ausführungsbeispiel wird das erfindungsgemäße Verfahren 1 auf der Infrastruktur des Bereitstellungsdienstes 11, im Detail auf den Rechnern des Bereitstellungsdienstes 11 aufgerufen und ausgeführt.

Die Autorisierungsdaten 14 der Autorisierungsverfahren-Nutzer 13 werden bzw. sind auf externen Servern hinterlegt, sodass im Verlauf des erfindungsgemäßen Verfahrens 1 eine Kommunikationen über die Softwareschnittstelle zwischen der Infrastruktur des Bereitstellungsdienstes 11 und der Infrastruktur der Autorisierungsdatenbank 12 stattfindet.

Darüber hinaus haben die Autorisierungsverfahren-Nutzer 13 jederzeit Zugriff auf die von ihnen hinterlegten Autorisierungsdaten 14, um beispielsweise ihre Autorisierungsdaten 14 zu ändern und/oder zu kontrollieren.

### Bezugszeichen

- 1: Computerimplementiertes Autorisierungsverfahren
- 2: Erster Bereitstellungsschritt
- 3: Erster Personenerkennungsschritt
- 4: Zweiter Personenerkennungsschritt
- 5: Zensurschritt
- 6: Freigabeschritt
- 7: Erstellung einer Personen-ID
- 8: Vergleich mit den Nutzer-IDs
- 9: Benachrichtigung Autorisierungsverfahren-Nutzer
- 10: Nachträgliche Benachrichtigung Autorisierungsverfahren-Nutzer
- 11: Bereitstellungsdienst
- 12: Autorisierungsdatenbank
- 13: Autorisierungsverfahren-Nutzer
- 14: Autorisierungsdaten
- 15: Autorisierungsinfrastruktur
- 16: Bereitgestellte Bildinformationen
- 17: Abgeleitete Bildinformationen

## Patentansprüche

1. Computerimplementiertes Autorisierungsverfahren (1) für digitale Bildinformationen zur Verwendung mit einem digitalen Bereitstellungsdienst (11), wobei dem digitalen Bereitstellungsdienst (11) von wenigstens einem ersten Bereitstellungsdienst-Nutzer in einem ersten Bereitstellungsschritt (2) Bildinformationen (16) bereitgestellt werden, wobei auf den bereitgestellten Bildinformationen basierende abgeleitete Bildinformationen (17) von dem Bereitstellungsdienst mittels einer Bereitstellungsdienst-Infrastruktur wenigstens einem zweiten Bereitstellungsdienst-Nutzer verfügbar gemacht werden, wobei der digitale Bereitstellungsdienst ein Soziales Netzwerk ist,
wobei in einer rechnerbasierten Autorisierungsdatenbank (12) Autorisierungsdaten (14) von Autorisierungsverfahren-Nutzern (13) hinterlegt werden oder hinterlegt sind, wobei die Autorisierungsdaten (14) nutzerspezifische, insbesondere biometrische Informationen und nutzerspezifische Bereitstellungsoptionen umfassen,
dass in einem ersten Personenerkennungsschritt (3) erkannt wird, ob auf den bereitgestellten Bildinformationen (16) eine Person abgebildet ist,
dass zumindest in dem Fall, in dem eine Person erkannt ist, mit einer rechnerbasierten Autorisierungsinfrastruktur (15) in einem zweiten Personenerkennungsschritt (4) unter Verwendung der nutzerspezifischen, insbesondere biometrischen Informationen ermittelt wird, ob die dargestellte Person eine Darstellung eines Autorisierungsverfahren-Nutzers (13) umfasst,
dass für den Fall, dass die bereitgestellten digitalen Bildinformationen eine Darstellung eines Autorisierungsverfahren-Nutzers (13) umfassen, unter Verwendung der nutzerspezifischen Bereitstellungsoptionen des dargestellten Autorisierungsverfahren-Nutzers (13) in einem Zensurschritt (5) aus den bereitgestellten digitalen Bildinformationen (16) entsprechend abgeleitete Bildinformationen (17) abgeleitet werden und
dass die abgeleiteten Bildinformationen (17) in einem Freigabeschritt (6) zur Bereitstellung zur Verfügung gestellt werden,
wobei der Autorisierungsverfahren-Nutzer nicht selbst bei dem entsprechenden Bereitstellungsdienst registriert sein muss, um die Veröffentlichung und/oder die Verbreitung von der Darstellung seiner Person durch den Bereitstellungsdienst zu kontrollieren, **dadurch gekennzeichnet,**
**dass** zusätzlich zu den bereitgestellten Bildinformationen auch eine Information über den ersten Bereitstellungsdienst-Nutzer bereitgestellt wird und dass für den Fall, dass der erste Bereitstellungsdienst-Nutzer als autorisierter Bereitsteller hinterlegt ist, die in dem Zensurschritt (5) erstellten abgeleiteten Bildinformationen (17) den ursprünglich bereitgestellten Bildinformationen (16) entsprechen, und insofern die ursprünglich bereitgestellten Bildinformationen (16) in dem Freigabeschritt (6) dem digitalen Bereitstellungsdienst (11) unzensiert verfügbar gemacht werden und
**dass** in dem Fall, in dem der Bereitstellungsdienst-Nutzer nicht als autorisierter Bereitsteller hinterlegt ist, dem Autorisierungsverfahren-Nutzer (13) vor dem Zensurschritt (5) eine Nachricht hinsichtlich der folgenden Zensur übermittelt wird, und wobei der Autorisierungsverfahren-Nutzer (13) den Bereitstellungsdienst-Nutzer innerhalb von einem festgelegten Zeitfenster seinen nutzerspezifischen Bereitstellungsoptionen hinzufügen kann, sodass in dem Zensurschritt (5) keine Zensur der bereitgestellten Bildinformationen erfolgt oder
**dass** nach der Freigabe (6) der abgeleiteten Bildinformationen (17) der Autorisierungsverfahren-Nutzer (13) innerhalb von einem festgelegten Zeitfenster seine nutzerspezifischen Bereitstellungsoptionen in Bezug auf den Bereitstellungsdienst-Nutzer ändern kann, sodass die Änderung der nutzerspezifischen Bereitstellungsoptionen für die freigegebenen Bildinformationen (17) realisiert wird.

2. Computerimplementiertes Verfahren (1) nach Anspruch 1, **dadurch gekennzeichnet, dass** der zweite Personenerkennungsschritt (4) in Abhängigkeit von wenigstens einem weiteren Kriterium ausgeführt wird, wobei das wenigstens eine weitere Kriterium vorzugsweise die auf den Bildinformationen dargestellte Umgebung, insbesondere die Anzahl der dargestellten Personen und/oder den Bereitstellungsdienst-Nutzer betrifft.

3. Computerimplementiertes Verfahren (1) nach Anspruch 2, **dadurch gekennzeichnet, dass** der zweite Personenerkennungsschritt (4) nicht ausgeführt wird, wenn die Anzahl der auf den Bildinformationen (16) erkannten Personen größer als 1, vorzugsweise größer 5, besonders bevorzugt größer als 10 ist.

4. Computerimplementiertes Verfahren (1) nach einem der Ansprüche 1 bis 3, **dadurch gekennzeichnet, dass** die biometrischen Informationen beispielsweise Proportionen des Gesichtes und/oder des Körpers des Autorisierungsverfahren-Nutzers (13) und/oder wenigstens ein weiteres charakteristisches Erkennungsmerkmal umfassen, wobei vorzugsweise in der Autorisierungsdatenbank (12) eine aus den biometrischen Informationen abgeleitete individuelle Nutzer-ID erstellt wird oder hinterlegt ist.

5. Computerimplementiertes Verfahren (1) nach einem der Ansprüche 1 bis 4, **dadurch gekennzeichnet, dass** die nutzerspezifischen Bereitstellungsoptionen wenigstens einen autorisierten Bereitsteller umfassen, wobei der wenigstens eine autorisierte Bereitsteller vorzugsweise über einen Nutzernamen und/oder eine E-Mail Adresse und/oder eine Telefonnummer und/oder eine andere dem Bereitsteller zuordenbare Identifikation hinterlegt ist oder hinterlegt wird.

6. Computerimplementiertes Verfahren (1) nach einem der Ansprüche 1 bis 5, **dadurch gekennzeichnet, dass** die nutzerspezifischen Bereitstellungsoptionen wenigstens eine der folgenden Optionen umfassen: bereichsweise Unkenntlichmachung der bereitgestellten Bildinformationen, insbesondere im Bereich des Gesichts des Autorisierungsverfahren-Nutzers, vollständige Unkenntlichmachung der bereitgestellten Bildinformationen, keine Beeinflussung der bereitgestellten Bildinformationen, Verschlüsselung der bereitgestellten Bildinformationen, Sperrung der möglichen Bereitstellung der Bildinformationen.

7. Computerimplementiertes Verfahren (1) nach einem der Ansprüche 1 bis 6, **dadurch gekennzeichnet, dass** sofern in dem ersten Personenerkennungsschritt (3) eine Person erkannt wird, eine Personen-ID, insbesondere basierend auf den dargestellten biometrischen Informationen, erstellt wird.

8. Computerimplementiertes Verfahren (1) nach Anspruch 7, **dadurch gekennzeichnet, dass** in dem zweiten Personenerkennungsschritt (4) die erstellte Personen-ID mit den in der Autorisierungsdatenbank (12) hinterlegten Nutzer-IDs verglichen wird und dass eine Darstellung eines Autorisierungsverfahren-Nutzers (13) bejaht wird, sofern die Übereinstimmung der Personen-ID mit einer Nutzer-ID wenigstens 70%, vorzugsweise wenigstens 80%, besonders bevorzugt wenigstens 90% beträgt.

## Claims

1. Computer-implemented authorization method (1) for digital image information for use with a digital delivery service (11), wherein the digital delivery service (11) is provided with image information (16) by at least one first delivery service user in a first delivery step (2), wherein derived image information (17) based on the provided image information is made available to at least one second delivery service user by the delivery service using a delivery service infrastructure,
wherein the digital delivery service is a social network,
wherein, in a computer-based authorization database (12), authorization data (14) from authorization procedure users (13) is or are stored, wherein the authorization data (14) comprises user-specific, in particular biometric, information and user-specific provision options,
that in a first person recognition step (3), it is recognized whether a person is depicted in the provided image information (16) ,
that, at least in the case where a person is recognized, a computer-based authorization infrastructure (15) is used in a second person recognition step (4) to determine, using the user-specific, in particular biometric, information, whether the person depicted comprises a representation of an authorization procedure user (13),
that, in the case the provided digital image information includes a representation of an authorization procedure user (13), using the user-specific delivery options of the depicted authorization procedure user (13) in a censorship step (5), image information (17) derived accordingly is derived from the provided digital image information (16), and
that the derived image information (17) is made available for delivery in an approval step (6),
wherein the authorization procedure user does not have to be registered with the corresponding delivery service in order to control the publication and/or distribution of the representation of his person by the delivery service,
**characterized in**
**that** in addition to the provided image information, information about the first delivery service user is also provided, and that in the event the first delivery service user is registered as an authorized provider, the derived image information (17) created in the censorship step (5) corresponds to the originally provided image information (16), so that the originally provided image information (16) is made available to the digital delivery service (11) uncensored in the release step (6) and
**that** in the event that the delivery service user is not registered as an authorized provider, a message regarding the following censorship is transmitted to the authorization procedure user (13) prior to the censorship step (5), and wherein the authorization procedure user (13) can add the delivery service user to his user-specific delivery options within a specified time window, so that no censorship of the provided image information takes place in the censorship step (5)
or
**that** after the release (6) of the derived image information (17), the authorization procedure user (13) can change his user-specific delivery options with regard to the delivery service user within a specified time window, so that the change to the user-specific delivery options for the released image information (17) is implemented.

2. Computer-implemented method (1) according to claim 1, **characterized in that** the second person recognition step (4) is performed depending on at least one further criterion, wherein the at least one further criterion preferably relates to the environment depicted in the image information, in particular the number of persons depicted and/or the delivery service user.

3. Computer-implemented method (1) according to claim 2, **characterized in that** the second person recognition step (4) is not performed if the number of persons recognized in the image information (16) is greater than 1, preferably greater than 5, and particularly preferably greater than 10.

4. Computer-implemented method (1) according to any one of claims 1 to 3, **characterized in that** the biometric information comprises, for example, proportions of the face and/or body of the authorization procedure user (13) and/or at least one further characteristic identification feature, wherein, preferably, an individual user ID derived from the biometric information is created or stored in the authorization database (12).

5. Computer-implemented method (1) according to any one of claims 1 to 4, **characterized in that** the user-specific delivery options comprise at least one authorized provider, wherein the at least one authorized provider is stored or will be stored preferably via a user name and/or an e-mail address and/or a telephone number and/or another identification assignable to the provider.

6. Computer-implemented method (1) according to any one of claims 1 to 5, **characterized in that** the user-specific delivery options comprise at least one of the following options: partial obscuring of the provided image information, in particular in the area of the face of the authorization procedure user, complete obscuring of the provided image information, no influence on the provided image information, encryption of the provided image information, blocking of the possible delivery of the image information.

7. Computer-implemented method (1) according to any one of claims 1 to 6, **characterized in that** if a person is recognized in the first person recognition step (3), a person ID is created, in particular based on the displayed biometric information.

8. Computer-implemented method (1) according to claim 7, **characterized in that** in the second person recognition step (4), the created person ID is compared with the user IDs stored in the authorization database (12) and that a representation of an authorization procedure user (13) is affirmed if the person ID matches a user ID by at least 70%, preferably at least 80%, and particularly preferably at least 90%.

## Revendications

1. Procédé d'autorisation mis en œuvre par ordinateur (1) pour des informations d'image numériques destinées à être utilisées avec un service de fourniture numérique (11), des informations d'image (16) étant fournies au service de fourniture numérique (11) par au moins un premier utilisateur de service de fourniture lors d'une première étape de fourniture (2), des informations d'image (17) dérivées sur la base des informations d'image fournies étant mises à la disposition d'au moins un deuxième utilisateur de service de fourniture par le service de fourniture au moyen d'une infrastructure de service de fourniture, le service de fourniture numérique étant un réseau social,
des données d'autorisation (14) d'utilisateurs de procédé d'autorisation (13) étant stockées dans une base de données d'autorisation informatisée (12), les données d'autorisation (14) comprenant des informations spécifiques à l'utilisateur, en particulier biométriques, et des options de fourniture spécifiques à l'utilisateur,
en ce que, lors d'une première étape de reconnaissance de personne (3), il est reconnu si l'image d'une personne est formée sur la base des informations d'image fournies (16),
en ce qu'au moins dans le cas où une personne est reconnue, il est déterminé au moyen d'une infrastructure d'autorisation informatisée (15), lors d'une deuxième étape de reconnaissance de personne (4), à l'aide des informations spécifiques à l'utilisateur, en particulier biométriques, si la personne représentée comprend une représentation d'un utilisateur de procédé d'autorisation (13),
en ce que, si les informations d'image numériques fournies comprennent une représentation d'un utilisateur de procédé d'autorisation (13), des informations d'image dérivées de manière correspondante (17) sont dérivées des informations d'image numériques fournies (16) lors d'une étape de censure (5) par utilisation des options de fourniture spécifiques à l'utilisateur de procédé d'autorisation (13) représenté et
en ce que les informations d'image dérivées (17) sont mises à disposition lors d'une étape de validation (6), l'utilisateur de procédé d'autorisation ne devant pas être enregistré lui-même auprès du service de fourniture correspondant pour contrôler la publication et/ou la distribution de la représentation de sa personne par le service de fourniture, **caractérisé**
**en ce qu'**en outre, en plus des informations d'image fournies, des informations concernant le premier utilisateur de service de fourniture sont également fournies et en ce que, dans le cas où le premier utilisateur de service de fourniture est stocké en tant que fournisseur autorisé, les informations d'image dérivées (17) créées lors de l'étape de censure (5) correspondent aux informations d'image initialement fournies (16), et dans la mesure où, lors de l'étape de validation (6), les informations d'image initialement fournies (16) sont mises à la disposition du service de fourniture numérique (11) de manière non censurée en ce que, dans le cas où l'utilisateur de service de fourniture n'est pas stocké en tant que fournisseur autorisé, un message relatif à la censure suivante est transmis à l'utilisateur de procédé d'autorisation (13) avant l'étape de censure (5), et l'utilisateur de procédé d'autorisation (13) pouvant ajouter l'utilisateur de service de fourniture à ses options de fourniture spécifiques à l'utilisateur dans une fenêtre temporelle spécifiée, de sorte qu'aucune censure des informations d'image fournies n'ait lieu lors de l'étape de censure (5)
ou
**en ce qu'**après la publication (6) des informations d'image dérivées (17), l'utilisateur de procédé d'autorisation (13) peut modifier ses options de fourniture spécifiques à l'utilisateur par rapport à l'utilisateur de service de fourniture dans une fenêtre temporelle spécifiée, de sorte que la modification des options de fourniture spécifiques à l'utilisateur pour les informations d'image validées (17) est réalisée.

2. Procédé mis en œuvre par ordinateur (1) selon la revendication 1, **caractérisé en ce que** la deuxième étape de reconnaissance de personne (4) est exécutée sur la base d'au moins un autre critère, ledit au moins un autre critère concernant de préférence l'environnement représenté sur les informations d'image, en particulier le nombre de personnes représentées et/ou l'utilisateur de service de fourniture.

3. Procédé mis en œuvre par ordinateur (1) selon la revendication 2, **caractérisé en ce que** la deuxième étape de reconnaissance de personne (4) n'est pas exécutée lorsque le nombre de personnes reconnues sur les informations d'image (16) est supérieur à 1, de préférence supérieur à 5, et de manière particulièrement préférée, supérieur à 10.

4. Procédé mis en œuvre par ordinateur (1) selon l'une des revendications 1 à 3, **caractérisé en ce que** les informations biométriques comprennent par exemple des proportions du visage et/ou du corps de l'utilisateur de procédé d'autorisation (13) et/ou au moins une autre particularité de reconnaissance caractéristique, un ID d'utilisateur individuel dérivé des informations biométriques étant de préférence créé ou stocké dans la base de données d'autorisation (12).

5. Procédé mis en œuvre par ordinateur (1) selon l'une des revendications 1 à 4, **caractérisé en ce que** les options de fourniture spécifiques à l'utilisateur comprennent au moins un fournisseur autorisé, ledit au moins un fournisseur autorisé étant stocké ou mémorisé de préférence par l'intermédiaire d'un nom d'utilisateur et/ou d'une adresse électronique et/ou d'un numéro de téléphone et/ou d'une autre identification pouvant être associée au fournisseur.

6. Procédé mis en œuvre par ordinateur (1) selon l'une des revendications 1 à 5, **caractérisé en ce que** les options de fourniture spécifiques à l'utilisateur comprennent au moins l'une des options suivantes :
masquage par zones des informations d'image fournies, en particulier dans la zone du visage de l'utilisateur de procédé d'autorisation, masquage complet des informations d'image fournies, aucune influence sur les informations d'image fournies, cryptage des informations d'image fournies, blocage de la fourniture éventuelle des informations d'image.

7. Procédé mis en œuvre par ordinateur (1) selon l'une des revendications 1 à 6, **caractérisé en ce que**, lors de la reconnaissance d'une personne lors de la première étape de reconnaissance de personne (3), un identifiant de personne est créé, en particulier sur la base des informations biométriques représentées.

8. Procédé mis en œuvre par ordinateur (1) selon la revendication 7, **caractérisé en ce que**, lors de la deuxième étape de reconnaissance de personne (4), l'ID de personne créée est comparée aux ID d'utilisateur stockés dans la base de données d'autorisation (12) et **en ce qu'**une représentation d'un utilisateur de procédé d'autorisation (13) est validée, dans la mesure où la concordance de l'ID de personne avec un ID d'utilisateur est d'au moins 70%, de préférence d'au moins 80%, et de manière particulièrement préférée d'au moins 90%.
